# EUROPÄISCHE PATENTANMELDUNG

(11) **EP 0 753 775 A2**
(43) Veröffentlichungstag der Anmeldung: **15.01.1997**
(21) Anmeldenummer: 96109402.6
(22) Anmeldetag: 12.06.1996
(51) Int. Cl.: G02B 6/42

(54) **Anordnung zur Ankopplung einer Lichtleitfaser an ein optoelektrisches Element**

(30) Priorität: 12.07.1995 DE 19525349
(71) Anmelder: ROBERT BOSCH GMBH, 70442 Stuttgart (DE)
(72) Erfinder: Hauer, Heiner, Dipl.-Ing., 70734 Fellbach (DE); Kuke, Albrecht, Dr.-rer.-nat., 71549 Auenwald (DE)

(57) **Zusammenfassung**

Anordnung zur Ankopplung einer Lichtleitfaser (4) an ein opto-elektronisches Sende- oder Empfangselement (7) mit einer zylinderförmigen Gradientenindexlinse (8), die mit der Lichtleitfaser in einer V-Nut (2) fixiert ist. Zur Erzielung eines einfachen Aufbaus wird der Durchmesser der Gradientenindexlinse (8) gleich dem Durchmesser der Lichtleitfaser (4) gewählt, und beide werden in einer gemeinsamen V-Nut (2) fixiert, die einen konstanten Nutquerschnitt aufweist. Dabei ist die Länge und die Pitchlänge der Gradientenindexlinse (8) derart gewählt, daß bei der Ankopplung an ein Sendeelement / Empfangselement die Bildebene / Gegenstandsebene in eine Stirnfläche der Gradientenindexlinse (8) fällt und diese Stirnfläche die Stirnfläche der Lichtleitfaser (4) berührt.

## Beschreibung

### Stand der Technik

Die Erfindung betrifft eine Anordnung zur Ankopplung einer Lichtleitfaser, insbesondere einer Einmodenfaser, an ein optisches Sende- oder Empfangselement mit einer zylinderförmigen Gradientenindexlinse, wobei Lichtleitfaser und Gradientenindexlinse jeweils in einer V-Nut fixiert sind.

Zur Ankopplung einer Einmodenfaser an eine Photodiode wurden einige Vorschläge gemacht, bei denen die Faser in einer V-Nut liegt und der aus der Faser austretende Freistrahl gegebenenfalls nach Umlenkung durch Reflexion auf die aktive Fläche einer planar montierten Photodiode gerichtet ist. Ebenso gibt es Vorschläge, bei denen das von einem Laser abgestrahlte Licht gegebenenfalls nach Strahlumlenkung auf eine in einer V-Nut gehaltene Faser gerichtet ist (DE 41 06 721 C2, DE 35 43 558 A1, US 5,071,213). Bei der Kopplung zwischen einer Einmodenfaser und einem Laser ist eine Strahltransformation zur Feldanpassung wegen der unterschiedlichen Taillenradien zwingend erforderlich. Hierzu wird in den genannten Vorschlägen eine Abbildung mit einer oder zwei Linsen verwendet. Bei der Kopplung zwischen einer Einmodenfaser und einer Photodiode ist eine Abbildung bei Verwendung einer großflächigen Photodiode nicht erforderlich. Soll aber zur Übertragung sehr hoher Bitraten eine Photodiode mit einer sehr kleinen aktiven Fläche eingesetzt werden oder sollen größere Strecken im Freistrahl, beispielsweise zur Durchdringung eines optisch transparenten Substrats, überbrückt werden, so ist auch hier zur Erhöhung des Koppelwirkungsgrades und der Montagetoleranzen eine Bündelung des Strahls durch eine Linse sehr vorteilhaft.

Nach dem Stand der Technik sind unter dem Namen Gradientenindexlinsen zylinderförmige Linsen bekannt, deren optische Wirkung auf einem radialen Gradienten des Brechungsindexes beruht. Solche Linsen werden bereits zur Kopplung zwischen Lichtleitfasern und optoelektronischen Wandlerelementen eingesetzt. Dabei ist eine genaue laterale und axiale Justage und eine Winkeljustage erforderlich. Die Brennweite dieser Linsen wird durch ihre Baulänge und durch die Größe des Brechungsindexgradienten bzw. der sich daraus ergebenden Pitchlänge bestimmt. Nach dem Stand der Technik sind Anwendungen bekannt, bei denen eine Gradientenindexlinse zur Halterung in eine anisotrop in Silizium geätzte oder in Metall geprägte V-Nut gelegt und dort fixiert wird. Bei diesen Anwendungen gemäß dem Stand der Technik hat die V-Nut zur Aufnahme der Linse eine deren größerem Durchmesser entsprechende größere Breite als eine auf gleiche Weise hergestellte V-Nut zur Aufnahme der Lichtleitfaser. Wegen der unterschiedlichen Breiten dieser aneinanderstoßenden V-Nuten treten bei der anisotropen Ätzung aufgrund der dabei entstehenden konvexen Ecken Toleranzprobleme auf, denn im Übergangsbereich zwischen der breiten und der schmalen V-Nut ist der Nutenrand schlecht reproduzierbar. Werden die Nuten geprägt, dann lassen sich die erforderlichen Toleranzen in der Größe von wenigen Mikrometern ohnehin nur sehr schwer einhalten.

Es ist Aufgabe der Erfindung, eine Anordnung der eingangs genannten Art anzugeben, die einfach aufgebaut ist. Die Aufgabe wird gelöst durch eine Anordnung mit den Merkmalen des Anspruches 1. Vorteilhafte Weiterbildungen sind in den Unteransprüchen angegeben.

In den oben genannten Anwendungen kann man erhebliche Verbesserungen in der Strahlführung erreichen, wenn man eine Gradientenindexlinse einsetzt, die den gleichen Durchmesser hat wie die verwendete Lichtleitfaser. Die Linse wird dann in die gleiche V-Nut wie die Lichtleitfaser eingelegt und fixiert. Weiter ist es vorteilhaft, die Länge der Gradientenindexlinse in Bezug zu ihrer Pitchlänge so zu wählen, daß die Gegenstands- bzw. Bildebene für die vorgesehene Abbildung gerade in die Stirnfläche der Gradientenindexlinse fällt. Auf diese Weise ist durch Anschlagen der Stirnflächen von Lichtleitfaser und Gradientenindexlinse eine axiale Justage nicht erforderlich. Die laterale Ausrichtung und die Winkelausrichtung wird mit der erforderlichen hohen Genauigkeit durch das Einlegen von Faser und Gradientenindexlinse in dieselbe V-Nut erreicht. Anstelle einer speziellen Gradientenindexlinse, die den gleichen Durchmesser wie die anzukoppelnde Einmodenfaser aufweist, kann auch ein kurzes Stück einer Gradientenindexfaser verwendet werden. Bei einer solchen Gradientenindexfaser, die typischerweise einen Kerndurchmesser von 50 µm besitzt, ist im Kern bereits ein Gradientenindexprofil vorgesehen. Zur Herstellung einer Gradientenindexlinse muß ein kurzes Stück von ca. 1/4 Pitchlänge entsprechend einigen Millimetern abgetrennt werden. Der Außendurchmesser einer Gradientenindexfaser ist typischerweise mit 125 µm ebenso groß wie der der anzukoppelnden Einmodenfaser, so daß beide in die gleiche V-Nut eingelegt werden können. Zur Verringerung von Reflexionen kann der Raum an der Stoßstelle zwischen Lichtleitfaser und Gradientenindexlinse und der Raum zwischen der Linse und dem optoelektronischen Wandlerelement mit einem indexangepaßten transparenten Kleber ausgefüllt werden. Dadurch wird gleichzeitig der Weg des Freistrahls vor Verschmutzungen geschützt.

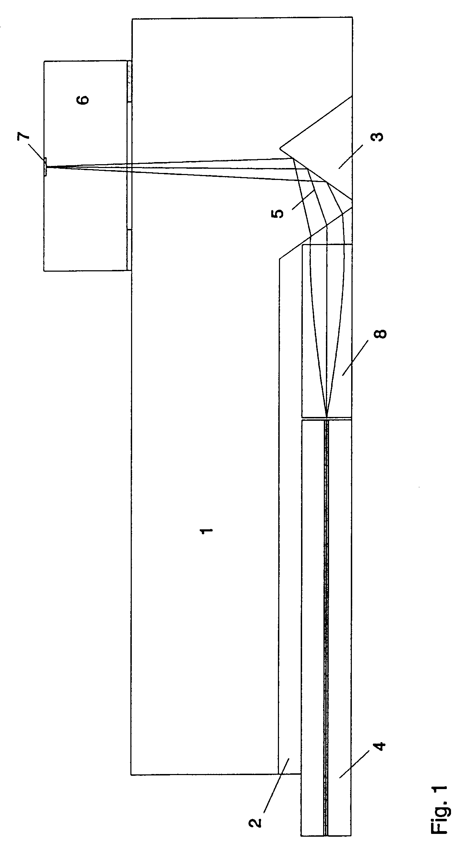

Ein Ausführungsbeispiel der Erfindung wird anhand von Figur 1 erläutert. In Figur 1 ist eine der oben genannten Anordnungen mit einer Gradientenindexlinse dargestellt. Bei dem Ausführungsbeispiel befindet sich auf der Unterseite eines Silizium-Substrates 1 eine anisotrop geätzte V-Nut und eine weitere anisotrop geätzte Vertiefung 3. Die Stirnfläche der Vertiefung 2 bildet zusammen mit einer Seitenfläche der Vertiefung 3 ein Siliziumprisma, an dessen Seitenflächen durch Brechung und Totalreflexion das aus der Faser 4 austretende Licht 5 nahezu senkrecht zur Substratoberfläche durch das Siliziumsubstrat hindurch gelenkt wird und auf eine auf der Oberfläche des Silizium-Substrates montierte Photodiode 6 mit einer aktiven Fläche 7 trifft. Nach dem Stand der Technik wurde diese Anordnung ohne ein strahlformendes Element eingesetzt. Ohne ein solches Element weitet sich der Strahl im Bereich der aktiven Fläche 7 auf einen Durchmesser von ungefähr 50 µm auf. Dies verbietet den Einsatz von kleinflächigen Photodioden für hohe Bitraten. In der erfindungsgemäßen Verbesserung dieser und ähnlicher Anordnungen wird in die gleiche V-Nut 2, die zur Halterung der Faser 4 vorgesehen ist, eine kreiszylindrische Gradientenindexlinse 8 eingelegt. Dadurch wird der aus der Faser austretende divergente Strahl in einen konvergenten Strahl umgewandelt. Die Abbildungseigenschaft der Gradientenindexlinse 8 wird über das Verhältnis von Baulänge zu Pitchlänge so gewählt, daß der Strahl unter Berücksichtigung der optischen Weglängen in den verschiedenen durchlaufenen Materialien gerade in der aktiven Zone der Photodiode fokussiert oder zumindest in seinem Durchmesser bedeutend verringert wird. Auf diese Weise wird es möglich, auch sehr kleinflächige Photodioden einzusetzen und dadurch einerseits die Bitrate und andererseits die Justagetoleranzen zu vergrößern.

## Patentansprüche

1. Anordnung zur Ankopplung einer Lichtleitfaser, insbesondere einer Einmodenfaser, an ein optoelektronisches Sende- oder Empfangselement mit einer zylinderförmigen Gradientenindexlinse, wobei Lichtleitfaser und Gradientenindexlinse jeweils in einer V-Nut fixiert sind, dadurch gekennzeichnet, daß der Durchmesser der Gradientenindexlinse (8) dem der Lichtleitfaser (4) entspricht und beide in einer gemeinsamen V-Nut (2) mit konstantem Nutquerschnitt fixiert sind, daß die Länge und die Pitchlänge der Gradientenindexlinse (8) derart gewählt sind, daß die Bildebene bei der Ankopplung an ein Sendeelement und die Gegenstandsebene bei der Ankopplung an ein Empfangselement in eine Stirnfläche der Gradientenindexlinse (8) fällt und diese Stirnflche die Stirnfläche der Lichtleitfaser (4) berührt.

2. Anordnung nach Anspruch 1, dadurch gekennzeichnet, daß an der Stoßstelle der Stirnflächen von Gradientenindexlinse (8) und Lichtleitfaser (4) ein indexangepaßter, transparenter Kleber vorgesehen ist.

3. Anordnung nach einem der Ansprüche 1 oder 2, dadurch gekennzeichnet, daß zwischen Gradientenindexlinse (8) und optoelektronischem Sende- bzw. Empfangselement (6) ein indexangepaßtes, transparentes Material vorgesehen ist.

4. Anordnung nach einem der Ansprüche 1 bis 3, dadurch gekennzeichnet, daß die V-Nut (7) anisotrop geätzt ist.

5. Anordnung nach einem der Ansprüche 1 bis 3, dadurch gekennzeichnet, daß die V-Nut (7) geprägt ist.
